(19) **Europäisches Patentamt**

**European Patent Office**

**Office européen des brevets**

(11) **EP 1 311 055 A2**

(12) # EUROPEAN PATENT APPLICATION

(43) Date of publication:
**14.05.2003 Bulletin 2003/20**

(51) Int Cl.⁷: **H02K 23/04**, H02K 5/24

(21) Application number: **02024821.7**

(22) Date of filing: **07.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **08.11.2001 JP 2001342638**
**29.10.2002 US 65541 P**

(71) Applicant: **Kabushiki Kaisha Moric**
**Shuuchi-gun, Shizuoka-ken (JP)**

(72) Inventors:
• **Kurita, Yoshikazu**
**Shuuchi-gun, Shizuoka-ken (JP)**
• **Suzuki, Akira**
**Shuuchi-gun, Shizuoka-ken (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Starter for engine**

(57)     An improved DC electrical starting motor and method for starting internal combustion engines that reduces starter motor noise in the period after the engine starts by damping the vibrations caused by motor cogging as it coasts to a halt. is done by reducing cogging torque and or rigidifying the starter motor housing. In addition several new structures foe reducing cogging torque are disclosed.

**FIG. 2**

Printed by Jouve, 75001 PARIS (FR)

EP 1 311 055 A2

FIG. 5

FIG. 12

## Description

Background of Invention

This invention relates to a starter motor for an engine for a vehicle such as a motorcycle or the like and to a method for starting such engines and reducing starter noise at the time of the starting operation.

In an engine for a vehicle such as a motorcycle, a starter motor is used at the time of engine starting to rotate an engine shaft under battery power. The starter motor is generally a DC motor driven through a relay by operation of a manual switch such as main switch or a starter switch of the vehicle. In this case, the switch is first turned ON to rotate the starter motor, for cranking. When the engine is started after the starter motor load drops to zero, resulting in a maximum rotational speed. At this moment, the switch is turned OFF to stop the power supply to the starter motor. As a result, the starter motor output shaft is disconnected from the engine shaft by a one way clutch type of device and it rotates idly by its inertia and stops after gradually reducing its rotational speed.

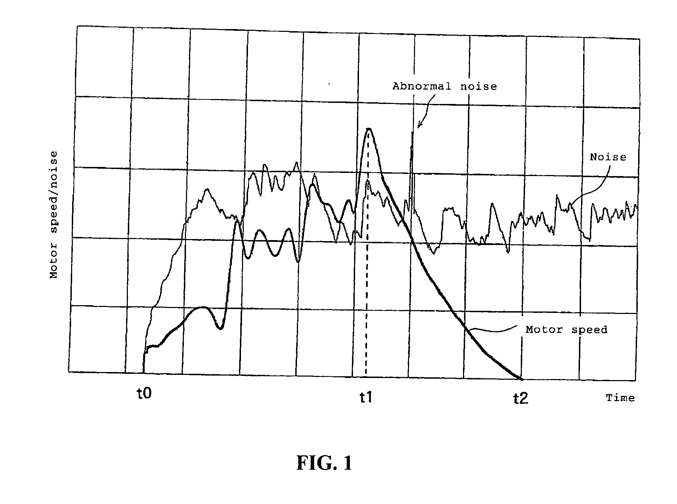

At the time of the engine starting described above, during the time while the starter motor is stopping its rotation after the power supply to the starter motor is OFF it generates an abnormal and unpleasant noise. The cause of this phenomenon may be understood by reference to FIG. 1. In this figure the horizontal axis represents time and the vertical axis represents both starter motor rotational speed and noise level.

The power source of the starter motor is turned ON at a time t0 and begins to rotate for cranking. When the engine is started, the starter motor load drops to zero and the rotational speed increases to a maximum. At a time t1 when this state is reached, the starter switch is turned OFF by hand.

As a result, the starter motor rotates idly as a result of its inertia, decreasing its rotational speed gradually and stopping eventually at a time t2. Between the times t1 and t2, an abnormally high noise is generated. The noise at this point is an abnormal and unpleasant one and unusually is louder than the engine noise or even that of the starter motor during the actual starting operation.

This abnormal noise is caused by the starter motor yoke of its stator resonating when the natural frequency of the yoke coincides with the number of times of cogging reaction at a specific motor speed. This resonance frequency corresponds to a frequency determined by the least common multiple of the number of slots of an armature and the number of magnetic poles of magnets, or the cogging number/rotation, and the cogging reaction produced at a specific motor speed. In an actual measurement shown in FIG. 1, the cogging number is the least common multiple of 28 for a motor with fourteen slots and four-pole magnets. An abnormal noise is generated at the time of the rotational speed of 5100 rpm. In this case, the resonance frequency is expressed as follows:

$$(28 \times 5100/60) \times 2 = 4760 \text{ Hz}.$$

More specifically, an armature connected to the output shaft of the starter motor is formed of a plurality of radially disposed cores. Electrical coils are wound on these cores and face a plurality of magnets on the inside surface of the starter motor yoke. The armature is rotated through successive attractions of magnetic forces of the magnets.

When the cores of the armature pass across the magnets and its polarities are changed, the armature changes its rotational torque, generating cogging with a perturbed movement. Therefore, the larger the magnetic forces are, the greater cogging is generated, resulting in an abnormal noise due to the reaction.

Normally the material of the permanent magnets is a ferrite-based magnetic material. However, neodymium-based magnets made from a magnetic material containing Nd of a rare metal element or its compound known as high-energy magnets are preferred because they permit a higher output starter motor for a given size. If such neodymium-based magnets are used, since the magnetic forces are great, the problem of an abnormal noise due to the cogging reaction is amplified.

In the co-pending application of Yoshikazu, Kurita entitled "Starter Arrangement And Method For An Engine", Serial No: 10/063641, filed May 7, 2002 and assigned to the Assignee hereof, there is disclosed a method and apparatus for avoiding this noise by applying a brake to the rotation of the starter motor shaft once the starter motor has shifted off. This is done by utilizing the continued rotation of the starter motor to be dissipated by operating it as a generator to add a charge to the vehicle battery. Although this is a very effective way of solving the problem, it does complicate the electrical circuitry and can add to the costs.

It is therefore a principle object of this invention to provide an improved starter motor arrangement for starting an internal combustion engine that reduces noise during the starting operation.

It is a further object to this invention to provide an improved starter motor arrangement for an internal combustion engine that reduces noise during the starting operation by reducing the cogging torque on the motor for causing more rapid deceleration of the motor when the starter motor is switched off and to avoid the vibrations caused thereby.

In connection with the attempts to reduce engine noise in the starter motor after the engine has started by reducing the cogging torque, it has been discovered that some of these methods might be possibly used in conjunction with electric motors and electric generators that are utilized for purposes other than engine starting. It is, therefore, a further object to this invention to provide an improved cogging torque reducing mechanism that can be utilized with rotating electrical machines in addition to those used as starter motors for internal combustion engines.

Summary of Invention

A first feature of this invention is adapted to be embodied in a starter for an internal combustion engine. The starter comprises a DC electrical motor having an output shaft in starting arrangement with a shaft of the engine for starting the engine. The starter motor is comprised of cooperating, relatively rotatable permanent magnet and coil winding elements comprised of spaced permanent magnets of opposite polarity and magnetic pole cores around which electrical coils are wound. Vibrations are reduced after engine starting has been effective by at least one of reducing the cogging torque of the starter motor and rigidifying the outer housing of the starter motor.

Another feature of this invention is adapted to be embodied in a rotating electrical machine comprised of relatively rotatable permanent magnet and coil winding elements. The permanent magnet element and specifically the permanent magnets thereof comprise a plurality of circumferentially spaced permanent magnets of opposite polarity. In accordance with one feature thereof, the permanent magnets have adjacent convex and concave surfaces that define an arcuate gap there between with the concave surfaces overlapping the convex surfaces in the circumferential direction. In accordance with another feature thereof, the magnets comprise axially spaced permanent magnet sections of the same polarity that are staggered with respect to each other in the circumferential direction.

Brief Description of Drawings

FIG. 1 is a graphical view showing the noise and speed of a prior art type of starter motor during engine starting operation.
FIG. 2 is a cross sectional view of a starter motor constructed and operated in accordance with the invention.
FIG. 3 is a cross sectional view taken along the line 3-3 in FIG. 2.
FIG. 4 is a cross sectional view taken along the line 4-4 in FIG. 2.
FIG. 5 is a developed view showing the core teeth in accordance with a first embodiment of the invention.
FIG. 6 is a developed view of the permanent magnets in accordance with another embodiment of the invention.
FIG. 7 is a developed view, in part similar to FIG. 6 and shows permanent magnets in accordance with another embodiment of the invention.
FIG. 8 is a developed view, in part similar to FIGS. 6 and 7 of the permanent magnets in accordance with yet another embodiment of the invention.
FIG. 9 is a developed view, in part similar to FIGS. 6-8 of the permanent magnets of yet a further embodiment of the invention.
FIG. 10 is a developed view, in part similar to FIGS. 6-9 of the permanent magnets of yet another embodiment of the invention.
FIG. 11 is a side elevational view of a starter motor as attached to the engine body in accordance with a prior art type of construction.
FIG. 12 is a side elevational view, in part similar to FIG. 11, and shows how the vibrations are reduced by reinforcing the starter motor housing in accordance with this embodiment of the invention.

Detailed Description

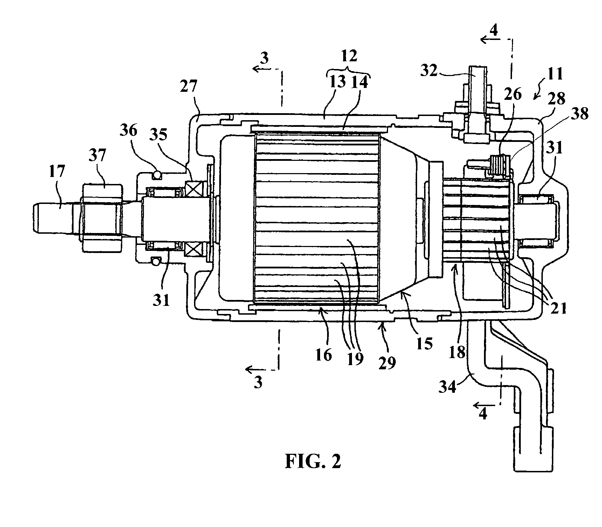

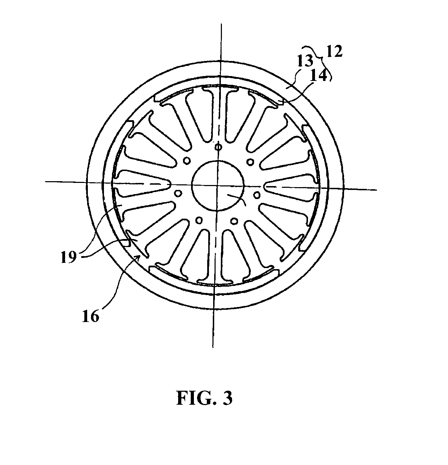

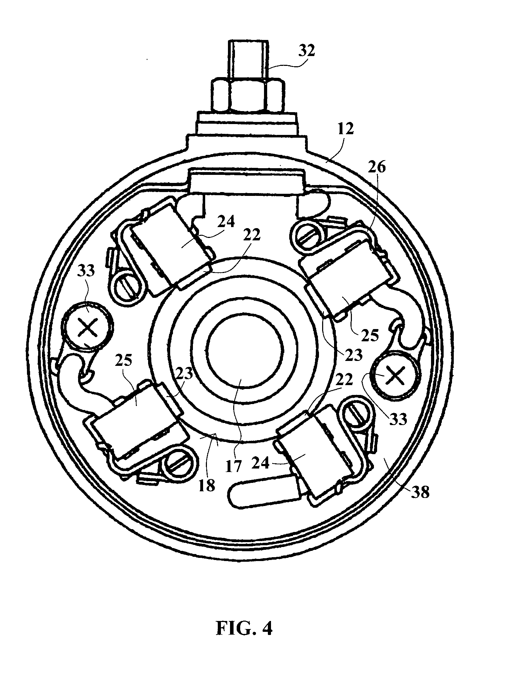

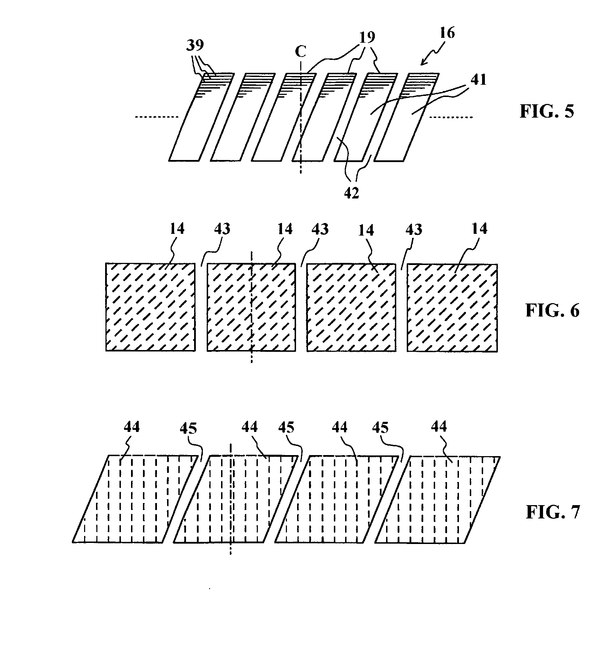

Referring now in detail to the drawings and initially primarily to FIGS. 2-4, a starter motor for an internal combustion engine (not shown) is indicated generally by the reference numeral 11. The starter motor 11 is comprised of a stator 12 formed of a cylindrical yoke 13 and four permanent magnets 14, of arc-shaped cross section, bonded on the inside surface of the yoke. The permanent magnets 14 are preferably formed from a neodymium (Nd)-based magnetic material that is magnetized after being bonded to the yoke 13.
An armature or rotor, indicated generally at 15 rotatably mounted inside the stator 12 in a manner to be described shortly. The armature 15 is comprised of a core 16 facing the magnets 14 and fixed to a starter motor output shaft 17. A commutator 18 is fixed adjacent to the core 16 on one end of the starter motor output shaft 17.
The core 16, as shown in FIGS. 2 and 3, is formed of a plurality of radially disposed core teeth 19. In the illustrated embodiment there are 14 core teeth 19. Electrical coils (not shown) are wound around the core pieces 19. The commutator 18 is formed of a plurality of contact pieces 21 corresponding in number to the core pieces 19 and that are electrically connected to the coil ends, as is well known in the art. Two sets of two brushes22 and 23 (FIG. 4) held by respective brush holders 24 and 25 are juxtaposed to the commutator 18 at its outside circumference. The brushes 22 and 23 are pressed against the contact pieces 21 of the commutator 18 by coil springs 26.
Fitted to the opposite ends sides of the cylindrical yoke 13 are a front cover 27 (FIG. 2) covering the left side of the yoke 13 as seen in the figure and a rear cover 28 covering the right side of the yoke. on the figure, collectively forming, with the yoke 13, a motor case indicated generally by the reference numeral 29. The starter motor output shaft 17 is journalled for rotation on the front cover 27 and the rear cover 28, respectively by bearings 31.
On the rear cover 28 (FIGS. 2 and 4) is provided a positive terminal 32 for power supply from the positive electrode of a battery (described later by reference to FIG. 5 mounted on the vehicle. The positive terminal 32 is suitably connected to the brushes 22 on the positive electrode side. The brushes 23 on the negative electrode side (ground side) are connected to the end closure 28 by grounding fasteners 33. The motor case 29 is grounded to the associated engine by a mounting bracket 34 that fixes the starter motor 11 to the engine thus acting as a negative terminal.

On the front cover 27 is mounted an oil seal 35 (FIG. 2) for preventing ingress of oil into the motor case 29 from the associated engine, and an O-ring 36 for sealing the mounting portion to the engine. On the starter motor output shaft 17 at the engine side end is provided a pinion gear 37 meshing with an flywheel gear (not shown) to rotate the engine shaft for starting. Some form of one way device such as a one way clutch is provided in this connection to permit the engine shaft from driving the starter motor once the engine has started to run under its own power, as is well known in this art.

Inside the rear cover 28 covering the commutator 18 at the end of the starter motor output shaft 17 is fixed a disk-like brush carrier38. The brush holders 24 and 25 are affixed to the brush carrier38 at four positions spaced radially at right angles to hold the opposing two positive electrode brushes 22 and opposing two negative electrode (grounding) brushes 23. As has been noted, the brushes 22, 23 are biased radially inwardly toward the commutator 18 by the coil springs 26. The positive electrode brushes 22 are connected to the positive terminal 32, and the negative electrode brushes 23 to the negative (grounding) terminal 34.

Referring now to FIG. 4, this shows a first embodiment for reducing unusual noise measures in accordance with the present invention. This embodiment is one of several that will be described and reduces the noise by reducing the cogging torque, particularly when the electrical power to the windings is discontinued on starting of the related engine.

This figure is a developed view of the radial core 16. In this embodiment each pole tooth 19 of the core 16 is formed on the skew relative to the rotational axis C of the rotor shaft 17. Such a skew arrangement is easily formed by laminating radial shaped thin iron sheets 39 constituting the core 16 and by slightly displacing the each of them to the rotating direction in the lamination. Thereby, the pole surfaces 41which face the permanent magnets 14 are formed on the skew resulting in a parallelogram shape. Thus the slot entries 42 formed between the teeth 19are skewed to the shaft axis C.

With such a constitution, pull-in force of the magnets 14 gradually acts along the skewed side edge of the pole tooth 19, so that cogging action is dispersed and generated gradually. As a result, the cogging is reduced, and the generation of unusual noise is reduced.

FIG. 5 shows another embodiment for reducing unusual noise by reducing the cogging torque in accordance with the present invention. The drawing shows a developed view of the magnets 14 of the stator 12. This embodiment is adapted to skew the magnetizing direction of each magnet 14. Each of the four magnets 14 is disposed in the circumferential direction at a radial spacing of 90 degrees. The dividing line 43between the magnets 14 is parallel to the shaft axis C. Each magnet 14 is skewed and magnetized in the same direction as shown with broken lines. In this embodiment, the pole surface 41 on the core side is, as shown in FIG. 1, parallel to the shaft center C without skewing.

Thus, by skewing the magnetizing direction of the magnet 14, the pull-in force of the magnets 14 acts on the core with gradually displacing to the axial direction, so that the cogging action is reduced, and the generation of the unusual noise due to the cogging can be reduced. In this embodiment, it is not necessary to skew the core teeth 19, so that the assembling work of the core or a coil winding work will not become complicated.

FIG.7 shows still another embodiment for unusual noise measures relating to the present invention by reducing the cogging force. In this embodiment the four pieces of the magnets, here indicated at 44, are of a parallelogram shape. The magnetizing direction is parallel to the shaft axis C as shown by the broken lines . The dividing line 45between the side edges of the magnets 44 is a skewed straight line to the shaft axis C.

Thus, by skewing the shape of the magnets 44 to be parallelograms, the pull-in force of the magnet on the core gradually acts with displacing to the axial direction, so that the cogging action is dispersed, and the generation of the unusual noise due to the cogging can be reduced.

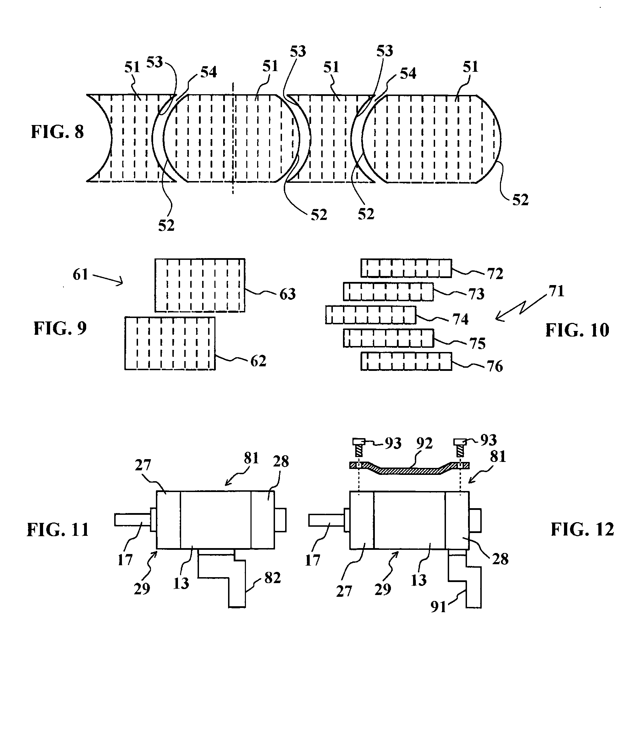

FIG.8 shows yet another embodiment for unusual noise measures relating to the present invention by reducing the cogging force. This embodiment is adapted to curve and form the side edge of the magnets, indicated here as 51 to be arc-shaped. Alternate magnets 51 have convex sides 52 and concave sides 53 to form arcuate slots 54 of uniform thickness between them. Thus, by curving and forming the side edge 52 and 53 of the magnets 51, the pull-in force of the magnet on the core gradually acts with displacing to the axial direction, so that the cogging action is dispersed, and the generation of the unusual noise due to the cogging can be reduced.

If the magnet shape is skewed or curved, the cogging action gradually acts with displacing to the axial direction as described above, and thrust force generates along with the displacement in the axial direction. In this case, the present embodiment has a symmetric shape where the dividing line 54 at a magnet boundary part is folded about the center of the axial direction, so that thrust force is canceled out each other on the both sides of the center in the axial direction, and smooth rotational movement can be obtained.

FIGS.9and 10 show two other embodiment for unusual noise measures relating to the present invention by reducing the cogging force . In these embodiment this is done by divide the four circumferentially spaced magnets in an axial direction and shift these segments relative to each other in a circumferential direction. The shifted segments overlap circumferentially. This provides an effect similar to the embodiment of FIG. 7.

In the embodiment of FIG. 9 each magnet pole, indicated here at 61 is divided into two axially and circumferentially spaced segments 62 and 63. These segments overlap in the circumferential direction.

In the embodiment of FIG. 10 each of magnets, indicated as 71 is divided into five axially and circumferentially spaced magnet segments 72, 73, 74, 75 and 76.This provides a result similar to that of FIG. 8.

Thus, by dividing each of the magnets 61 and 71 in the axial direction and displacing the segments in the circumferential direction, when the motor rotates the pull-in force of the magnet is divided and acts with a time lag, so that the cogging action is dispersed, and the generation of the unusual noise due to the cogging can be reduced.

In each of the embodiments described thus far, the unusual noise has been abated by reducing or smoothing out the cogging torque. Next will be described two embodiments as shown in FIGS. 11 and 12 wherein these noises are reduced by rigidifying the overall housing assembly of the starter motor, indicated generally in these figures by the reference numeral 81. These embodiments are adapted to improve the rigidity of the starter motor 81 to reduce resonance from the cogging. The motor 81, itself may also employ any of the previous embodiments for reducing cogging in addition to the rigidifying structures now to be described.

Generally, the construction of the motor 81 in each embodiment is the same as that already described by reference to FIGS. 2 through 4. Therefore, the external components of the motor 81 as illustrated as well as the starter shaft are identified by the same reference numerals as those previously employed. That is, the starter motor 81 includes an outer case 29 comprised of the stator shell 13 to which the end closures 27 and 28 are affixed and in which the starter motor shaft 17 is journalled in the manner as aforedescribed.

In the embodiment of FIG. 11, a mounting bracket 82 is welded and integrated with the yoke 13 of the motor casing 13. This bracket 82 is utilized to attach the starter motor 81 to be secured to the vehicle body frame or engine (not shown). Thus, by welding and integrating the bracket 82 to the motor body 13, specifically the yoke 13 in this embodiment the rigidity of the casing body 13 increases. Thus vibration caused by the cogging is reduced and the generation of the unusual noise due to the cogging is reduced. Furthermore, since the starter motor mounting bracket 82 is not fixed directly to either the front cover 27 or the rear cover 28 their constructions are simplified.

Figure 12 shows an embodiment utilizing rigidifying the motor housing 29 employing a conventional starter motor mounting bracket 91 attached to or integral with one of the end closures, the rear one 28 in the illustrated embodiment. A pressing bracket 92 is secured to the front cover 27 and the rear cover 28by attaching screws 93. This pressing bracket 92 abuts against the motor body 29 and specifically the yoke 13. Thus the rigidity of the motor body 29 is increased and vibration caused by the cogging is reduced. Therefore the generation of the unusual noise due to the cogging is reduced.

Thus it should be readily apparent that the described apparatus achieves the goals set out above in a low cost and highly effective manner. Of course those skilled in the art will understand that the embodiments described are only a preferred embodiments of the invention and various changes and modifications may be made without departing from the spirit and scope of the invention, as defined by the appended claims.

An improved DC electrical starting motor and method for starting internal combustion engines that reduces starter motor noise in the period after the engine starts by damping the vibrations caused by motor cogging as it coasts to a halt. is done by reducing cogging torque and or rigidifying the starter motor housing. In addition several new structures foe reducing cogging torque are disclosed.

## Claims

1. A starter for an internal combustion engine, said starter comprising a DC electrical motor having an output shaft in starting arrangement with a shaft of the engine for starting the engine said motor being comprised of cooperating, relatively rotatable permanent magnet and coil winding elements, said permanent magnet element being comprised of circumferentially spaced permanent magnets of opposite polarity, said coil winding element being comprised of circumferentially spaced magnetic pole cores around which electrical coils are wound, said cores having ends in facing relation to said permanent magnets, said motor having reduced vibration after engine starting by at least one of reducing the cogging torque of the starter motor and rigidifying the outer housing of the starter motor.

2. A starter for an internal combustion engine as set forth in claim I, wherein the motor vibrations after engine starting are reduced by reducing the cogging torque of the starter motor.

3. A starter for an internal combustion engine as set forth in claim 2, wherein the relationship between the pole cores facing ends and the permanent magnets is skewed to reduce the cogging torque of the starter motor.

4. A starter for an internal combustion engine as set forth in claim 3, wherein the permanent magnets are skewed relative to the axis of relative rotation and the pole cores are not.

5. A starter for an internal combustion engine as set forth in claim 4, wherein the magnetization of the permanent magnets is skewed but there shape is not.

6. A starter for an internal combustion engine as set forth in claim 4, wherein the edges of the permanent magnets are skewed but their magnetization is in the direction of the axis of relative rotation.

7. A starter for an internal combustion engine as set forth in claim 6, wherein the edges of the permanent magnets are curved to provide curved gaps therebetween.

8. A starter for an internal combustion engine as set forth in claim 7, wherein the facing edges of the permanent magnets are respectively concave and convex to provide a constant width in the gap therebetween.

9. A starter for an internal combustion engine as set forth in claim 4, wherein each of the permanent magnets is comprised of axially spaced and circumferentially spaced but circumferentially overlapping segments.

10. A starter for an internal combustion engine as set forth in claim 9, wherein each permanent magnet is comprised of only two segments.

11. A starter for an internal combustion engine as set forth in claim 9, wherein each permanent magnet is comprised of an uneven number of segments consisting of a center segment and side segments circumferentially spaced from said center segment but circumferentially overlapping said center segment.

12. A starter for an internal combustion engine as set forth in claim 1I, wherein there are more than one side segment on each side of the center segment and the side segments on each side are circumferentially spaced from each other.

13. A starter for an internal combustion engine as set forth in claim 3, wherein the pole cores are skewed relative to the axis of relative rotation and the permanent magnets are not.

14. A starter for an internal combustion engine as set forth in claim I3, wherein the cores are laminated and the laminations are circumferentially spaced from each other but in overlapping relationship.

15. A starter for an internal combustion engine as set forth in claim I, wherein the motor vibrations after engine starting are reduced by rigidifying the outer housing of the starter motor.

16. A starter for an internal combustion engine as set forth in claim I5, wherein the motor outer housing comprises a central yoke portion carrying the permanent magnet element and closed by end closures.

17. A starter for an internal combustion engine as set forth in claim I6, wherein the outer housing is rigidified by a rigidifying member fixed relative to and engaging said central yoke portion.

18. A starter for an internal combustion engine as set forth in claim I7, wherein the rigidifying member also functions as a mounting bracket for said starter.

19. A starter for an internal combustion engine as set forth in claim I8, wherein the mounting bracket is directly affixed to the central yoke portion.

20. A starter for an internal combustion engine as set forth in claim I7, wherein the rigidifying member is directly affixed to the end closures and is in abutting relation to the central yoke portion.

21. A rotating electrical machine of reduced cogging torque comprised of cooperating, relatively rotatable permanent magnet and coil winding elements, said permanent magnet element being comprised of circumferentially spaced permanent magnets of opposite polarity, said coil winding element being comprised of circumferentially spaced magnetic pole cores around which electrical coils are wound, said cores having ends in facing relation to said permanent magnets, the relationship between said pole cores facing ends and said permanent magnets being skewed to reduce the cogging torque of the starter motor, the edges of said permanent magnets are curved to provide curved gaps therebetween and to effect the skewing.

22. A starter for an internal combustion engine as set forth in claim 21, wherein the facing edges of the permanent magnets are respectively concave and convex to provide a constant width in the gap therebetween.

23. A rotating electrical machine of reduced cogging torque comprised of cooperating, relatively rotatable permanent magnet and coil winding elements, said permanent magnet element being comprised of circumferentially spaced permanent magnets of opposite polarity, said coil winding element being comprised of circumferentially spaced magnetic pole cores around which electrical coils are wound, said cores having ends in facing relation to said permanent magnets, the relationship between said pole cores facing ends and said permanent magnets being skewed to reduce the cogging torque of the starter motor, each of said permanent magnets being comprised of axially spaced and circumferentially spaced but circumferentially overlapping segments to effect the skewing.

24. A starter for an internal combustion engine as set forth in claim 23, wherein each permanent magnet is comprised of only two segments.

25. A starter for an internal combustion engine as set forth in claim 23, wherein each permanent magnet is comprised of an uneven number of segments consisting of a center segment and side segments circumferentially spaced from said center segment but circumferentially overlapping said center segment.

26. A starter for an internal combustion engine as set forth in claim 25, wherein there are more than one side segment on each side of the center segment and the side segments on each side are circumferentially spaced from each other.

FIG. 1

FIG. 2

FIG. 3

FIG. 4

FIG. 5

FIG. 6

FIG. 7

FIG. 8

51 53 54 51 53 51 53 54 51
52 52 52 52 52

61

FIG. 9

63

62

72
73
74
75
76

71

FIG. 10

FIG. 11

27 81 28
17 29 13 82

93 92 93
27 81
17 27 29 13 28
91

FIG. 12